# EUROPEAN PATENT APPLICATION

(11) **EP 3 916 437 A1**
(43) Date of publication of application: **01.12.2021**
(21) Application number: 20744826.7
(22) Date of filing: 21.01.2020
(51) Int. Cl.: G02B 5/08, A42B 1/18, G02B 5/30, G02C 7/00, G02C 7/12

(54) **OPTICAL SHEET AND OPTICAL COMPONENT**

(30) Priority: 21.01.2019 JP 2019008089
(71) Applicant: Sumitomo Bakelite Co.Ltd., Shinagawa-ku Tokyo 140-0002 (JP)
(72) Inventor: KITAMURA, Masahiro, Tokyo 140-0002 (JP); NISHINO, Satoshi, Tokyo 140-0002 (JP); AISU, Junpei, Tokyo 140-0002 (JP)
(74) Representative: Müller-Boré & Partner Patentanwälte PartG mbB
(86) International application number: PCT/JP2020/001846
(87) International publication number: WO 2020/153324

(57) **Abstract**

An optical sheet of the present invention is an optical sheet used by being disposed on a surface of an optical member having light transmitting properties, the optical sheet including a pair of base materials having light transmitting properties, and a half mirror layer provided between the pair of base materials, which transmits a part of incident light and reflects the rest of the incident light. The base material positioned on an opposite side to the optical member among the pair of base materials includes a coloring material.

## Description

### Technical Field

The present invention relates to an optical sheet and an optical component.

### Background Art

Various optical multilayer films are used in optical products such as eyeglasses and cameras, and devices that cause optical and visual phenomena such as display screens of display devices (for example, refer to Patent Literature 1).

The optical multilayer film is used as an antireflection film or a half mirror, for example.

The optical multilayer film disclosed in Patent Literature 1 is manufactured by forming and laminating a metal thin film on a surface of a transparent base material such as a lens by a vacuum vapor deposition method, for example. By appropriately setting a thickness or a material of each metal thin film, the optical multilayer film functions as an antireflection film or a half mirror.

However, the optical multilayer film disclosed in Patent Literature 1 is exposed on a portion of the surface (outermost layer) and may be worn or damaged. In order to prevent this, it is considered to increase the thickness of the optical multilayer film to some extent. However, in a case where a sheet on which an optical multilayer film is formed is used by being attached to a spectacle lens, there is a problem that if the optical multilayer film is thick, cracks occur in the optical multilayer film and the optical characteristics deteriorate.

In addition, in such an optical multilayer film, the color of reflected light, that is, the color when the lens is viewed from the outside is determined by the total number of layers, the thickness of each layer, the material of each layer, and the like. As described above, in a case where the optical characteristics are prioritized, it is difficult to adjust the total number of layers of the optical multilayer film, the thickness of each layer, the material of each layer, and the like.

As described above, it is difficult to improve the designability while preventing the deterioration of the optical characteristics due to the crack in the half mirror layer.

### Citation List

### Patent Literature

[PTL 1] Japanese Unexamined Patent Publication No. 2009-058703

### Summary of Invention

### Technical Problem

An object of the present invention is to provide an optical sheet that can protect a half mirror layer, has excellent optical characteristics, and is excellent in designability.

### Solution to Problem

Such an object is achieved by the present invention of the following (1) to (6).

(1) An optical sheet that is used by being disposed on a surface of an optical member having light transmitting properties, the optical sheet including:
a pair of base materials having light transmitting properties; and
a half mirror layer provided between the pair of base materials, which transmits a part of incident light and reflects the rest of the incident light,
in which a base material positioned on an opposite side to the optical member among the pair of base materials includes a coloring material.

(2) The optical sheet according to (1), further including: a polarized layer provided between the base material on the optical member side among the pair of base materials and the half mirror layer.

(3) An optical sheet used by being disposed on a surface of an optical member having light transmitting properties, the optical sheet including:
a pair of base materials having light transmitting properties;
a half mirror layer provided between the pair of base materials, which transmits a part of incident light and reflects the rest of the incident light; and
an adhesive layer bonding the base material positioned on an opposite side to the optical member among the pair of base materials and the half mirror layer,
in which the adhesive layer includes a coloring material.

(4) The optical sheet according to (3), in which the adhesive layer includes a urethane-based adhesive.

(5) The optical sheet according to any one of (1) to (4), in which the coloring material is one or a combination of two or more of a quinoline-based coloring agent, an anthraquinone-based coloring agent, a perylene-based coloring agent, a polymethine coloring agent, a porphyrin complex coloring agent, and a phthalocyanine coloring agent.

(6) An optical component including: an optical member having light transmitting properties; and
the optical sheet according to any one of (1) to (5), which is used by being disposed on a surface of the optical member.

### Advantageous Effects of Invention

According to the present invention, it is possible to provide an optical sheet and an optical component which can protect a half mirror layer, have excellent optical characteristics, and are excellent in designability.

### Brief Description of Drawings

FIG. 1 is a perspective view showing an optical component (sunglasses) including an optical sheet (first embodiment) of the present invention.
FIG. 2 is a perspective view of an optical component (a sun visor) including the optical sheet (first embodiment) of the present invention.
FIG. 3 is an enlarged cross-sectional view of an optical sheet included in the lens with an optical sheet shown in FIG. 1.
FIG. 4 is an enlarged cross-sectional view of an optical sheet (second embodiment) of the present invention.
FIG. 5 is an enlarged cross-sectional view of an optical sheet (third embodiment) of the present invention.

### Description of Embodiments

Hereinafter, an optical sheet and an optical component of the present invention will be described in detail based on preferable embodiments shown in the accompanying drawings.

### <First embodiment>

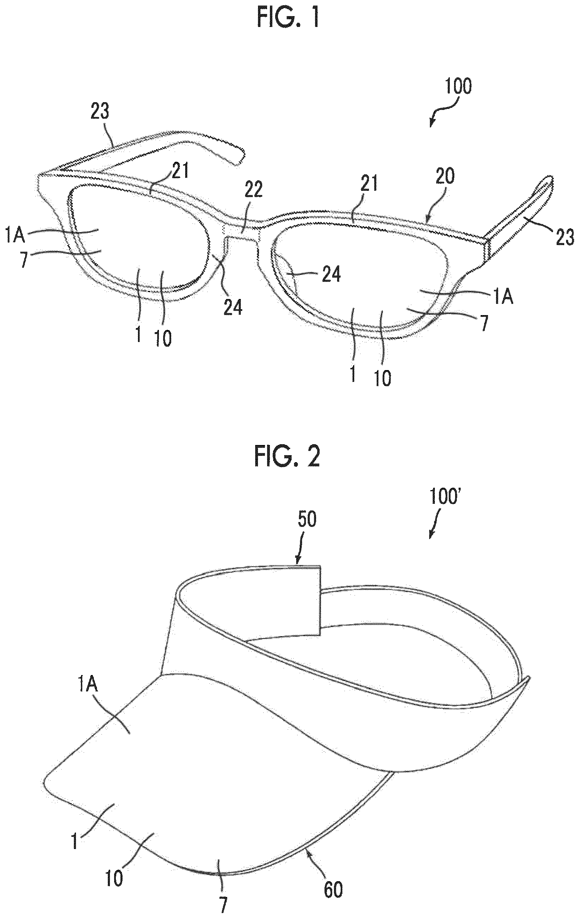

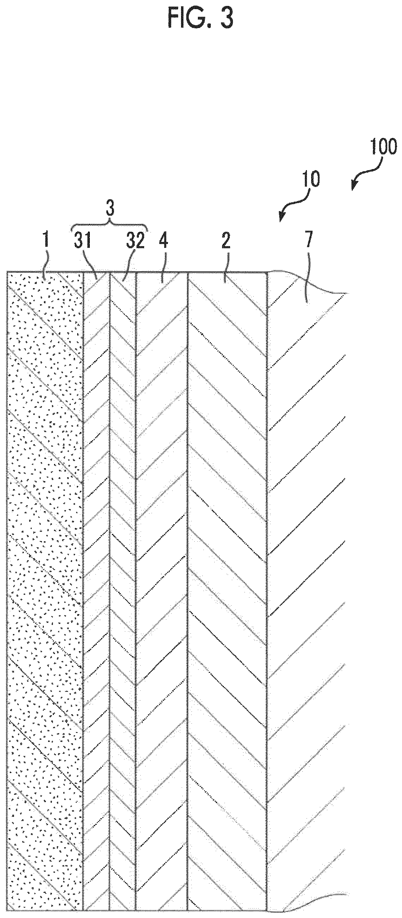

FIG. 1 is a perspective view of an optical component (sunglasses) including an optical sheet (first embodiment) of the present invention. FIG. 2 is a perspective view of an optical component (a sun visor) including the optical sheet (first **embodiment) of the present invention.** FIG. 3 **is an enlarged cross-sectional view of an optical sheet included in the lens with an optical sheet shown in** FIG. 1.

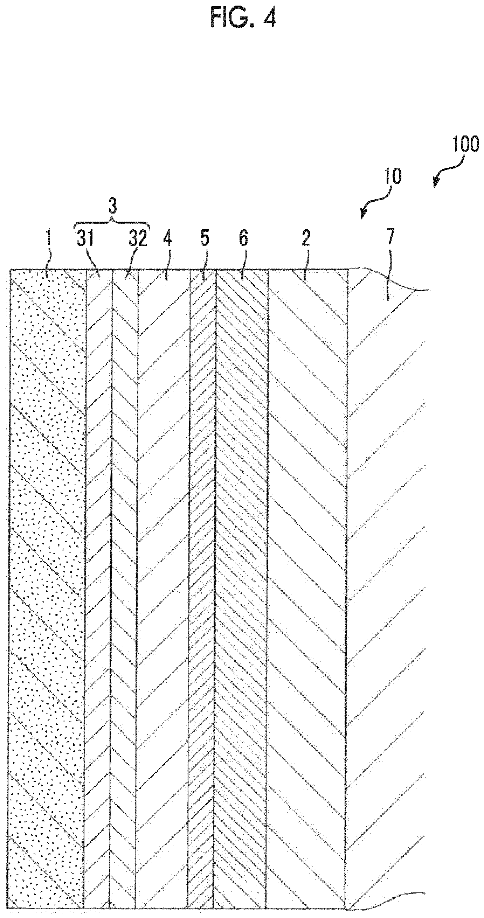

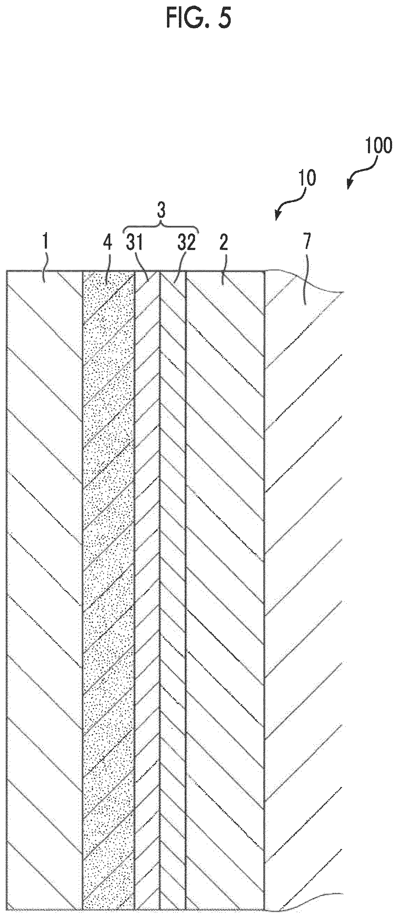

In FIGS. 1 and 2, when the sunglasses are worn on a user's head, a user's eye side surface of the lens is referred to as **a back side surface, and an opposite side surface thereof is referred to as a front side surface. That is, in** FIG. 3 (the same applies to FIGS. 4 and 5), a left side surface is the "front side surface" and a right side surface is the "back side surface". **In addition, in** FIG. 3 **(the same applies to** FIGS. 4 **and** **5****),** a **thickness direction of the optical sheet is exaggerated, but the actual dimensions are significantly different.**

### [Optical component]

**As shown in** FIG. 1, **sunglasses (optical component 100)** include a frame 20 mounted on a user's head, and a lens 1A with **an optical sheet fixed to the frame 20. In the present** specification, a term "lens" includes both of a lens having a **light collecting function and a lens not having a light collecting function.**

**As shown in** FIG. 1, **the frame 20 is a member mounted on** the user's head, **and includes a rim portion 21, a bridge portion** 22, a temple portion 23 that can be hung on the user's ear, and a nose pad portion 24. Each rim portion 21 has a ring shape, and is a portion where the lens 1A with an optical sheet is mounted inside.

The bridge portion 22 is a portion that connects each rim portion 21. The temple portion 23 has a vine shape and is connected to an edge of each rim portion 21. The temple portion 23 is a portion that can be hung on the user's ear. The nose pad portion 24 is a portion that comes into contact with the user's nose in a mounting state in which the sunglasses (optical component 100) are mounted on the user's head. With this, it is possible to reliably maintain the mounting state.

As long as the frame 20 can be mounted in the user's head, a shape of the frame 20 is not limited to the configuration shown in the figure.

The optical component of the present invention is characterized to include the optical sheet 10 of the present invention to be described later. With this, it is possible to exhibit a function as sunglasses while having advantages of the optical sheet 10 to be described later.

As shown in FIG. 2, the sun visor (optical component 100' ) includes a ring-shaped mounting portion 50 mounted on a user's head and a collar 60 provided in front of the mounting portion 50. The collar 60 has a lens 1A with an optical sheet. With this, it is possible to exhibit a function as a sun visor while having advantages of the optical sheet 10 to be described later.

The lens 1A with an optical sheet includes a lens 7 (optical member) and an optical sheet 10 laminated on a surface (front side surface) of the lens 7.

A constituent material of the lens 7 is not particularly limited as long as it has light transmitting properties, and examples thereof include various resin materials such as various thermoplastic resins, thermosetting resins, various curable resins such as photocurable resins, various glass materials, various crystalline materials, and the like.

Examples of the resin material include polyolefins such as polyethylene, polypropylene and ethylene-propylene copolymer, polyvinyl chloride, polystyrene, polyamide, polyimide, polycarbonate, poly-(4-methylpentene-1), ionomer, acrylic resin, polymethylmethacrylate, acrylonitrile-butadiene-styrene copolymer (ABS resin), acrylonitrile-styrene copolymer (AS resin), butadiene-styrene copolymer, polyesters such as polyethylene terephthalate (PET) and polybutylene terephthalate (PBT), polyether, polyetherketone (PEK), polyetheretherketone (PEEK), polyetherimide, polyacetal (POM), polyphenylene oxide, polysulfone, polyethersulfone, polyphenylene sulfide, polyallylate, aromatic polyester (liquid crystal polymer), polytetrafluoroethylene, polyvinylidene fluoride, other fluorine resins, epoxy resins, phenol resins, urea resins, melamine resins, silicone resins, polyurethanes, or copolymers mainly formed thereof, blends, polymer alloys, and the like, and one thereof can be used or two or more thereof can be used in combination.

In addition, the glass material is not particularly limited as long as it has light transmitting properties, and examples thereof include soda glass, crystalline glass, quartz glass, lead glass, potassium glass, borosilicate glass, non-alkali glass, and the like.

In addition, the crystalline material is not particularly limited as long as it has light transmitting properties, and examples thereof include sapphire, quartz, and the like. In addition, a thickness of the lens 7 is not particularly limited, but is preferably 0.5 mm or more and 5.0 mm or less, and more preferably 1.0 mm or more and 3.0 mm or less. With this, it is possible to achieve relatively high strength and weight reduction at the same time.

### [Optical sheet]

Subsequently, the optical sheet 10 will be described.

As shown in FIG. 3, the optical sheet 10 is formed of a laminate including a first base material 1, a second base material 2, a half mirror layer 3 provided therebetween, and an adhesive layer 4 provided between the half mirror layer 3 and the second base material 2. In addition, the optical sheet 10 is laminated in an order of the first base material 1, the half mirror layer 3, the adhesive layer 4, and the second base material 2. In addition, the optical sheet 10 is used by being laminated (attached) to the lens 7, in a direction in which the first base material 1 is positioned on an opposite side to the lens 7, that is, the front side.

In addition, the optical sheet 10 has flexibility. With this, the optical sheet 10 can be attached following the curvature of the lens 7.

### (First base material and second base material)

The first base material 1 and the second base material 2 have a function of supporting and protecting the half mirror layer 3.

The first base material 1 and the second base material 2 are made of a material having light transmitting properties (visible light transmitting properties). The constituent materials of the first base material 1 and the second base material 2 are not particularly limited, but examples thereof include cyclic ether resin such as acrylic resin, methacrylic resin, polycarbonate, polystyrene, epoxy resin, and oxetane resin, polyamide, polyimide, polybenzoxazole, polysilane, polysilazane, silicone resin, fluorine resin, polyurethane, polyolefin resin, polybutadiene, polyisoprene, polychloroprene, polyester such as PET and PBT, polyethylene succinate, polysulfone, polyether, or cyclic olefin resin such as benzocyclobutene resin and norbornene resin, and the like, and one thereof can be used or two or more thereof can be used in combination (polymer alloy, polymer blend (mixture), copolymer, and the like).

Among these, by using polycarbonate, it is possible to obtain an optical sheet 10 having excellent heat resistance and abrasion resistance. In addition, by using the polyamide resin, it is possible to obtain an optical sheet 10 having excellent impact resistance and chemical resistance.

The polycarbonate is not particularly limited, and various polycarbonates (aromatic polycarbonate, aliphatic polycarbonate) can be used, and among these, aromatic polycarbonate is preferable. The aromatic polycarbonate includes an aromatic ring in the main chain, and with this, it is possible to further improve the strength of the optical sheet 10.

The aromatic polycarbonate is synthesized by an interfacial polycondensation reaction between bisphenol and phosgene, an ester exchange reaction between bisphenol and diphenyl carbonate, and the like, for example.

Examples of the bisphenol include bisphenol A, bisphenol (modified bisphenol) which is a source of a repeating unit of the polycarbonate represented by the following formula 1), and the like, for example. 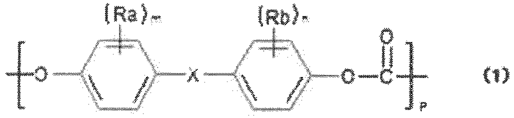 (In the formula (1), X is an alkyl group having 1 to 18 carbon atoms, an aromatic group, or a cycloaliphatic group, Ra and Rb each independently are an alkyl group having 1 to 12 carbon atoms, m and n each independently are an integer of 0 to 4, and p is the number of repeating units.)

Specific examples of the bisphenol that is a source of the repeating unit of the polycarbonate represented by the formula (1) include 4,4'-(pentane-2,2-diyl)diphenol, 4,4'-(pentane-3,3-diyl)diphenol, 4,4'-(butane-2,2-diyl)diphenol, 1,1'-(cyclohexanediyl)diphenol, 2-cyclohexyl-1,4-bis(4-hydroxyphenyl)benzene, 2,3-biscyclohexyl-1,4-bis(4-hydroxyphenyl)benzene, 1,1'-bis(4-hydroxy-3-methylphenyl)cyclohexane, 2,2'-bis(4-hydroxy-3-methylphenyl)propane, and the like, and one thereof can be used or two or more thereof can be used in combination.

In particular, as the polycarbonate, bisphenol-type polycarbonate having a skeleton derived from bisphenol is preferable as a main component. By using the bisphenol-type polycarbonate, the optical sheet 10 exhibits further excellent strength.

An average viscosity molecular weight of the polycarbonate is preferably 15,000 or more and 28,000 or less, and more preferably 18,000 or more and 23,000 or less.

With this, it is possible to sufficiently enhance the strength of the optical sheet 10. In addition, in a molten state of the polycarbonate, it is possible to sufficiently enhance the fluidity.

In addition, a melt flow rate (MFR) measured in accordance with JIS K7210 of the polycarbonate is preferably 5 g/10 min or more and 40 g/10 min or less, and more preferably 20 g/10 min or more and 35 g/10 min or less. With this, it is possible to sufficiently enhance the fluidity of the polycarbonate in a molten state.

The constituent materials of the first base material 1 and the second base material 2 may be the same or different.

Thicknesses of the first base material 1 and the second base material 2 may be the same or different, but for example, is preferably 0.05 mm or more and 1 mm or less, and more preferably 0.06 mm or more and 0.8 mm or less.

### (Half mirror layer)

The half mirror layer 3 is provided between the first base material 1 and the second base material 2, and has a function of transmitting a part of incident light and reflecting the rest of the incident light. That is, the half mirror layer is a layer having a so-called half mirror function.

The half mirror layer 3 has a high refractive index layer 31 and a low refractive index layer 32 having a lower photorefractive index than the high refractive index layer 31. In the shown configuration, the high refractive index layer 31 and the low refractive index layer 32 are laminated in this order from the front side (first base material 1 side).

The high refractive index layer 31 and the low refractive index layer 32 are vapor deposition films formed by, for example, vacuum deposition such as a resistance heating method and an electron beam heating method (EB method), and the half mirror layer 3 is a laminate of these.

In addition, the constituent materials of the high refractive index layer 31 and the low refractive index layer 32 include, oxides or fluorides such as SiO₂, SiO, TiO₂, TiO, Ti₂O₃, Ti₂O₅, Al₂O₃, TaO₂, Ta₂O₅, NdO₂, NbO, Nb₂O₃, NbO₂, Nb₂O₅, CeO₂, MgO, Y₂O₃, SnO₂, WO₃, HfO₂, ZrO₂, Sc₂O₃, CrO, Cr₂O₃, In₂O₃, La₂O₃, CaF₂, MgF₂, Na₃AlF₆, AlF₃, BaF₃, CeF₃, CaF₂, LaF₂, LiF, Na₅Al₃F₁₄, NdF₃, and YF₃, and metal materials such as In, Cr, Ti, Ni, Au, Cu, Sn, Zr and Al, and the like.

Among the metal materials, the constituent material of the high refractive index layer 31 is preferably Cr or Zr. On the other hand, among the metal materials, the constituent material of the low refractive index layer 32 is preferably In.

With this, the refractive index of the high refractive index layer 31 can be made higher than that of the low refractive index layer 32. Therefore, as will be described later, the half mirror layer 3 is a layer having a half mirror function. In addition, with this, it is possible to enhance the bendability of the half mirror layer 3, that is, to prevent cracks from occurring.

Among the oxides, the constituent material of the high refractive index layer 31 is preferably Ta₂O₅, HfO₂, ZrO₂, Y₂O₃, Sc₂O₃, and CeO₂, and more preferably ZrO₂ and CeO₂. On the other hand, among the oxides or fluorides, the constituent material of the low refractive index layer 32 is preferably SiO, SiO₂, MgF₂, CaF₂, Na₃AlF₆, and Na₅Al₃F₁₄. With this, the refractive index of the high refractive index layer 31 can be made higher than that of the low refractive index layer 32. Therefore, as will be described later, the half mirror layer 3 is a layer having a half mirror function.

When a metal material such as Au, Cu, and In is used as the constituent material, the half mirror layer 3 can be made into a single layer, the thickness can be made as thin as possible, and occurrence of cracks can be suppressed more effectively. In addition, since the type of mirror reflection color is limited in the single layer, the half mirror layer 3 can be made into a multilayer film within a range in which the occurrence of cracks can be effectively suppressed, and various mirror reflection colors can be used.

In addition, the physical thicknesses of the high refractive index layer 31 and the low refractive index layer 32 may be the same or different, but are preferably 1 nm or more and 200 nm or less, more preferably 1.5 nm or more and 150 nm or less, further more preferably 1.5 nm or more and 100 nm or less, and particularly preferably 1.5 nm or more and 75 nm or less.

The optical thickness (for a wavelength of 500 nm) of the high refractive index layer 31 and the low refractive index layer 32 is preferably 0.002/4λ nm or more and 0.4/4λ nm or less, and more preferably 0.003/4λ nm or more and 0.3/4 λ nm or less.

By making the high refractive index layer 31 and the low refractive index layer 32 having such a thickness, the half mirror layer 3 can sufficiently exhibit the effect as a half mirror.

In addition, the total thickness of the half mirror layer 3 (the sum of the thicknesses of the high refractive index layer 31 and the low refractive index layer 32) is 5 nm or more and 500 nm or less. With this, the half mirror layer 3 can sufficiently exhibit the effect as a half mirror, and can prevent the half mirror layer 3 from being cracked when it is bent and deformed.

The total thickness of the half mirror layer 3 means an average thickness of the half mirror layer 3. This average thickness can be, for example, a value obtained by exposing the cross section and using SEM or TEM.

The total thickness of the half mirror layer 3 is preferably 5 nm or more and 500 nm or less, more preferably 7.5 nm or more and 450 nm or less, further more preferably 10 nm or more and 400 nm or less, further more preferably 10 nm or more and 200 nm or less, and particularly preferably 10 nm or more and 150 nm or less.

In a case where the total thickness of the half mirror layer 3 is thinner than 5 nm, the half mirror layer 3 cannot sufficiently exhibit the effect as a half mirror, and the designability may be deteriorated. On the other hand, in a case where the total thickness of the half mirror layer 3 is thicker than 500 nm, in a case where the optical sheet 10 is made to follow a curved surface having a radius of curvature of 130.8 mm or more, for example, cracks may occur in the half mirror layer 3.

For example, in a case where the half mirror layer 3 is a single layer, the thickness of the half mirror layer 3 can be 5 nm or more and 500 nm or less. With this, the half mirror layer 3 can sufficiently exhibit the effect as a half mirror, and can prevent the half mirror layer 3 from being cracked when it is bent and deformed.

The half mirror layer 3 is not limited to the configuration as shown in the figure, may be constituted of, for example, one layer (single layer) of the high refractive index layer 31 or the low refractive index layer 32, and may have a multi-layer structure of three or more layers in which the high refractive index layer 31 and the low refractive index layer 32 are alternately laminated.

### (Adhesive layer)

The adhesive layer 4 is provided between the second base material 2 and the half mirror layer 3, and has a function of bonding the second base material 2 and the half mirror layer 3.

The adhesive layer 4 is constituted of an adhesive having light transmitting properties. Examples of the adhesive include silicone-based, silylated urethane-based, urethane-based, epoxy-based, polyolefin-based, chlorinated polyolefin-based, urethane-modified acrylic, acrylic-based, cyanoacrylate-based, rubber-based, polyester-based, polyimide-based, and phenol-based adhesives.

Among these, the adhesive layer 4 is preferably constituted of a silylated urethane-based or urethane-modified acrylic-based urethane-based adhesive. With this, it possible to prevent the generation of gas during curing. In particular, since the half mirror layer 3 has a relatively high gas barrier property, bubbles are likely to remain in the adhesive layer 4, but in a case where a urethane-based adhesive is used, the bubbles can be prevented from remaining.

A thickness of the adhesive layer 4 is not particularly limited, and is preferably 1 µm or more and 300 µm or less, and more preferably 5 µm or more and 200 µm or less.

With such an adhesive layer 4, the second base material 2 and the half mirror layer 3 can be bonded.

Such an optical sheet 10 is obtained by sequentially laminating the half mirror layer 3 on the first base material 1, applying an adhesive on the half mirror layer 3, attaching the second base material 2 onto the adhesive, and curing the adhesive.

In addition, in the optical sheet 10, since the half mirror layer 3 is not exposed on the surface (upper surface or lower surface of the optical sheet 10), the half mirror layer 3 is prevented from being worn or damaged, that is, can be protected.

A total thickness of the optical sheet 10 is not particularly limited, but is preferably 0.1 mm or more and 2.0 mm or less, and more preferably 0.12 mm or more and 1.8 mm or less. With this, the lens 7 can be reliably followed and attached to the curved surface.

When manufacturing such an optical sheet 10, for example, the optical sheet 10 can be manufactured by forming the half mirror layer 3 on the first base material 1, applying an adhesive (adhesive layer 4) on the surface of the half mirror layer 3 or on one surface or both surfaces of the second base material 2, and bonding the first base material 1 and the second base material 2 so as to interpose the half mirror layer 3.

Such an optical sheet 10 is used by being laminated on the lens 7. Examples of the laminating method include a method of adhering the lens 7 and the optical sheet 10 via an adhesive, or a method of placing the optical sheet 10 on a bottom of a mold, causing a resin material forming the lens 7 to flow into the mold in the state for curing, and the like.

### [Coloring material]

In such an optical sheet 10, the first base material 1 includes a coloring material. With this, the optical sheet 10 can be seen in a desired color when viewed from the outside. In addition, due to the synergistic effect with the reflected light in the half mirror layer 3, the desired color shines brightly, and the designability is excellent. In particular, since the optical sheet 10 is positioned outside the half mirror layer 3 at a time of use, the effect of enhancing the designability can be remarkably exhibited.

This coloring material is one or a combination of two or more of a quinoline-based coloring agent, an anthraquinone-based coloring agent, a perylene-based coloring agent, a polymethine coloring agent, a porphyrin complex coloring agent and a phthalocyanine coloring agent. With this, particularly in a case where the first base material 1 is made of the resin material as described above, in the process of manufacturing the first base material 1, that is, when the resin material as the main material and the coloring material are mixed, these can be mixed well, and it is possible to prevent or suppress the agglomeration of the coloring material.

Examples of the quinoline-based coloring agent include alkyl-substituted quinoline compounds such as 2-methylquinoline, 3-methylquinoline, 4-methylquinoline, 6-methylquinoline, 7-methylquinoline, 8-methylquinoline, 6-isopropylquinoline, 2,4-dimethylquinoline, 2,6-dimethylquinoline, and 4,6,8-trimethylquinoline; amine group-substituted quinoline compounds such as 2-aminoquinoline, 3-aminoquinoline, 5-aminoquinoline, 6-aminoquinoline, 8-aminoquinoline, and 6-amino-2-methylquinoline; alkoxy group-substituted quinoline compounds such as 6-methoxy-2-methylquinoline, and 6,8-dimethoxy-4-methylquinoline; and halogen group-substituted quinoline compounds such as 6-chloroquinoline, 4,7-dichloroquinoline, 3-bromoquinoline, and 7-chloro-2-methylquinoline.

Examples of the anthraquinone-based coloring agent include (1) 2-anilino-1,3,4-trifluoroanthraquinone, (2) 2-(o-ethoxycarbonylanilino)-1,3,4-trifluoroanthraquinone, (3) 2-(p-ethoxycarbonylanilino)-1,3,4-trifluoroanthraquinone, (4) 2-(m-ethoxycarbonylanilino)-1,3,4-trifluoroanthraquinone, (5) 2-(o-cyanoanilino)-1,3,4-trifluoroanthraquinone, (6) 2-(p-cyanoanilino)-1,3,4-trifluoroanthraquinone, (7) 2-(m-cyanoanilino)-1,3,4-trifluoroanthraquinone, (8) 2-(o-nitroanilino)-1,3,4-trifluoroanthraquinone, (9) 2-(p-nitroanilino)-1,3,4-trifluoroanthraquinone, (10) 2-(m-nitroanilino)-1,3,4-trifluoroanthraquinone, (11) 2-(p-tert-butylanilino)-1,3,4-trifluoroanthraquinone, (12) 2-(o-methoxyanilino)-1,3,4-trifluoroanthraquinone, (13) 2-(2,6-diisopropylanilino)-1,3,4-trifluoroanthraquinone, (14) 2-(2,6-dichloroanilino)-1,3,4-trifluoroanthraquinone, (15) 2-(2,6-difluoroanilino)-1,3,4-trifluoroanthraquinone, (16) 2-(3,4-dicyanoanilino)-1,3,4-trifluoroanthraquinone, (17) 2-(2,4,6-trichloroanilino)-1,3,4-trifluoroanthraquinone, (18) 2-(2,3,5,6-tetrachloroanilino)-1,3,4-trifluoroanthraquinone, (19) 2-(2,3,5,6-tetrafluoroanilino)-1,3,4-trifluoroanthraquinone, (20) 3-(2,3,4,5-tetrafluoroanilino)-2-butoxy-1,4-difluoroanthraq uinone, (21) 3-(4-cyano-3-chloroanilino)-2-octyloxy-1,4-difluoroanthraqu inone, (22) 3-(3,4-dicyanoanilino)-2-hexyloxy-1,4-difluoroanthraquinone, (23) 3-(4-cyano-3-chloroanilino)-1,2-dibutoxy-4-fluoroanthraquin one, (24) 3-(p-cyanoanilino)-2-phenoxy-1,4-difluoroanthraquinone, (25) 3-(p-cyanoanilino)-2-(2,6-diethylphenoxy)-1,4-difluoroanthr aquinone, (26) 3-(2,6-dichloroanilino)-2-(2,6-dichlorophenoxy)-1,4-difluor oanthraquinone, (27) 3-(2,3,5,6-tetrachloroanilino)-2-(2,6-dimethoxyphenoxy) -1,4-difluoroanthraquinone, (28) 2,3-dianilino-1,4-difluoroanthraquinone, (29) 2,3-bis(p-tert-butylanilino)-1,4-difluoroanthraquinone, (30) 2,3-bis(p-methoxyanilino)-1,4-difluoroanthraquinone, (31) 2,3-bis(2-methoxy-6-methylanilino)-1,4-difluoroanthraquinon e, (32) 2,3-bis(2,6-diisopropylanilino)-1,4-difluoroanthraquinone, (33) 2,3-bis(2,4,6-trichloroanilino)-1,4-difluoroanthraquinone, (34) 2,3-bis(2,3,5,6-tetrachloroanilino)-1,4-difluoroanthraquino ne, (35) 2,3-bis(2,3,5,6-tetrafluoroanilino)-1,4-difluoroanthraquino ne, (36) 2,3-bis(p-cyanoanilino)-1-methoxyethoxy-4-fluoroanthraquino ne, (37) 2-(2,6-dichloroanilino)-1,3,4-trichloroanthraquinone, (38) 2-(2,3,5,6-tetrafluoroanilino)-1,3,4-trichloroanthraquinone, (39) 3-(2,6-dichloroanilino)-2-(2,6-dichlorophenoxy)-1,4-dichlor oanthraquinone, (40) 2-(2,6-dichloroanilino) anthraquinone, (41) 2-(2,3,5,6-tetrafluoroanilino)anthraquinone, (42) 3-(2,6-dichloroanilino)-2-(2,6-dichlorophenoxy) anthraquinone, (43) 2,3-bis(2-methoxy-6-methylanilino)-1,4-dichloroanthraquinon e, (44) 2,3-bis(2,6-diisopropylanilino) anthraquinone, (45) 2-butylamino-1,3,4-trifluoroanthraquinone, (46) 1,4-bis(n-butylamino)-2,3-difluoroanthraquinone (47) 1,4-bis(n-octylamino)-2,3-difluoroanthraquinone, (48) 1,4-bis(hydroxyethylamino)-2,3-difluoroanthraquinone, (49) 1,4-bis(cyclohexylamino)-2,3-difluoroanthraquinone, (50) 1,4-bis(cyclohexylamino)-2-octyloxy-3-fluoroanthraquinone, (51) 1,2,4-tris(2,4-dimethoxyphenoxy-3-fluoroanthraquinone, (52) 2,3-bis(phenylthio)-1-phenoxy-4-fluoroanthraquinone, (53) 1,2,3,4-tetra(p-methoxyphenoxy)anthraquinone, and the like.

Examples of the perylene-based coloring agent include N,N'-dimethylperylene-3,4,9,10-tetracarboxylic diimide, N,N'-diethylperylene-3,4,9,10-tetracarboxylic diimide, N,N'-bis(4-methoxyphenyl)-perylene-3,4,9,10-tetracarboxylic diimide, N,N'-bis(4-ethoxyphenyl)-perylene-3,4,9,10-tetracarboxylic diimide, N,N'-bis(4-chlorophenyl)-perylene-3,4,9,10-tetracarboxylic diimide, and the like, and particularly preferable examples thereof include N,N'-bis(3,5-dimethylphenyl)-perylene-3,4,9,10-tetracarboxy lic diimide, and the like.

Examples of the polymethine coloring agent include streptocyanine or open chain cyanine, hemicyanine, closed cyanine, merocyanine, and the like.

Examples of the porphyrin complex coloring agent include tetraazaporphyrin metal complex, tetraarylporphyrin, octaethylporphyrin, and the like.

Examples of the phthalocyanine coloring agents include CoPc-4-sulfonic acid sodium salt, cobalt Pc tetracarboxylic acid, octahydroxy NiPc, and the like.

The coloring agent included in the first base material 1 may be a coloring agent different from the coloring agents exemplified above. The coloring agent is not particularly limited, and examples thereof include a pigment, a dye, and the like, and these can be used alone or used by being mixed together. In addition, it is possible to use the coloring agent by mixing thereof with materials described above.

The pigment is not particularly limited, and examples thereof include phthalocyanine-based pigments such as phthalocyanine green and phthalocyanine blue, azo-based pigments such as fast yellow, disazo yellow, condensed azo yellow, penzoimidazolone yellow, dinitroaniline orange, penzimidazolone orange, toluidine red, permanent carmine, permanent red, naphthol red, condensed azo red, benzimidazolone carmine, and benzimidazolone brown, anthraquinone-based pigments such as anthrapyrimidine yellow and anthraquinonyl red, azomethine-based pigments such as copper azomethine yellow, quinophthalone-based pigments such as quinophthalone yellow, isoindoline-based pigments such as isoindoline yellow, nitroso-based pigments such as nickel dioxime yellow, perinone-based pigments such as perinone orange, quinacridone-based pigments such as quinacridone magenta, quinacridone maroon, quinacridone scarlet, and quinacridone red, perylene-based pigments such as perylene red and perylene maroon, pyrrolopyrrole-based pigments such as diketopyrrolopyrrole red, organic pigments such as dioxazine-based pigments such as dioxazine violet, carbon-based pigments such as carbon black, lamp black, furnace black, ivory black, graphite, and fullerene, chromate-based pigments such as chrome yellow and molybdate orange, sulfide-based pigments such as cadmium yellow, cadmium lithopone yellow, cadmium orange, cadmium lithopone orange, silver vermilion, cadmium red, cadmium lithopone red, and sulfidation, oxide-based pigments such as ocher, titanium yellow, titanium barium nickel yellow, red iron, lead red, amber, brown iron oxide, zinc iron chrome brown, chromium oxide, cobalt green, cobalt chrome green, titanium cobalt green, cobalt blue, cerulean blue, cobalt aluminum chrome blue, iron black, manganese ferrite black, cobalt ferrite black, copper chromium black, and copper chromium manganese black, hydroxide-based pigments such as viridian, ferrocyanide-based pigments such as Prussian blue, silicate-based pigments such as ultramarine blue, phosphate-based pigments such as cobalt violet and mineral violet, and inorganic pigments such as others (for example, cadmium sulfide, cadmium selenide, and the like), and the like, and one thereof can be used or two or more thereof can be used in combination.

The dye is not particularly limited, and examples thereof include metal complex coloring agent, cyan-based coloring agent, xanthene-based coloring agent, azo-based coloring agent, hibiscus coloring agent, blackberry coloring agent, raspberry coloring agent, pomegranate juice coloring agent, chlorophyll coloring agent, porphyrin-based compounds such as tetraazoporphyrin compound, and the like, and one thereof can be used or two or more thereof can be used in combination.

The content of such a coloring material in the first base material 1 (total content in a case where a plurality of types of coloring materials are used) is preferably 0.001 wt% or more and 5 wt% or less, and more preferably 0.003 wt% or more and 4 wt% or less. With this, it is possible to enhance the designability, and to prevent or suppress the agglomeration of the coloring material.

As described above, the optical sheet 10 of the present invention is an optical sheet used by being disposed on the surface of the lens 7 (optical member) having light transmitting properties, and includes the first base material 1 and the second base material 2, which are a pair of base materials having light transmitting properties, and a half mirror layer 3 provided between the first base material 1 and the second base material 2, which transmits a part of incident light and reflects the rest of the incident light. In addition, the first base material 1 positioned on an opposite side to the lens 7 (optical member) among the first base material 1 and the second base material 2 includes a coloring material. With this, due to the synergistic effect of the coloring material included in the first base material 1 and the reflected light in the half mirror layer 3, the desired color shines brilliantly, and the designability is excellent. In particular, since the first base material 1 is positioned outside the half mirror layer 3 at the time of use, the effect of enhancing the designability can be remarkably exhibited. In addition, since the half mirror layer 3 is not exposed on the surface (upper surface or lower surface of the optical sheet 10) and is protected by the first base material 1 and the like, the half mirror layer 3 is prevented from being worn or damaged. From the above, the optical sheet 10 can protect the half mirror layer 3, has excellent optical characteristics, and is excellent in designability.

### <Second embodiment>

FIG. 4 is an enlarged cross-sectional view of the optical sheet (second embodiment) of the present invention.

Hereinafter, the second embodiment of the optical sheet of the present invention will be described with reference to this figure, but the differences from the above-described embodiments will be mainly described, and the same matters will be omitted.

The present embodiment is the same as the first embodiment except that it has a polarized layer.

As shown in FIG. 4, in the present embodiment, the optical sheet 10 further includes a polarized layer 5 and an adhesive layer 6. In the optical sheet 10 of the present embodiment, the second base material 2, the adhesive layer 6, the polarized layer 5, the adhesive layer 4, the half mirror layer 3 and the first base material 1 are laminated in this order from the lens 7 side.

### (Polarized layer)

The polarized layer 5 is provided between the second base material 2 and the half mirror layer 3, and is bonded to the half mirror layer 3 and the second base material 2 by the adhesive layer 4 and the adhesive layer 6. The adhesive layer 6 can have the same structure as the adhesive layer 4 described above.

The polarized layer 5 has a function of extracting linearly polarized light having a polarization plane in a predetermined direction from incident light (natural light that is not polarized) . With this, the incident light incident on the eye via the optical sheet 10 is polarized.

A polarization degree of the polarized layer 5 is not particularly limited, but is preferably 50% or more and 100% or less, and more preferably 80% or more and 100% or less, for example. In addition, a visible light transmittance of the polarized layer 5 is not particularly limited, but is preferably 5% or more and 60% or less, and more preferably 10% or more and 50% or less, for example.

Such a polarized layer 5 is not particularly limited as long as it has the functions, but examples thereof include a film obtained by adsorbing and dying a polymer film formed of polyvinyl alcohol (PVA), partially formalized polyvinyl alcohol, polyethylene vinyl alcohol, polyvinyl butyral, polycarbonate, and partially saponified product of ethylene-vinyl acetate copolymer with a dichroic substance such as iodine and a dichroic dye, and uniaxially stretching thereof, a polyene-based alignment film such as a dehydrated product of polyvinyl alcohol and a dechlorinated product of polyvinyl chloride, and the like.

Among these, the polarized layer 5 is preferably a film obtained by adsorbing and dying a polymer film having polyvinyl alcohol (PVA) as a main material with iodine or a dichroic dye and uniaxially stretching thereof . The polyvinyl alcohol (PVA) is a material that is excellent in all of transparency, heat resistance, affinity with iodine or a dichroic dye which is a dyeing agent, and orientation during stretching. Therefore, the polarized layer 5 mainly formed of PVA is excellent in heat resistance and excellent in a polarization function.

Examples of the dichroic dye include chloratin fast red, congo red, brilliant blue 6B, benzopurine, chlorazole black BH, direct blue 2B, diamine green, chrysophenone, sirius yellow, direct first red, acid black, and the like.

A thickness of the polarized layer 5 is not particularly limited, and is preferably 5 µm or more and 60 µm or less, and more preferably 10 µm or more and 40 µm or less, for example.

In addition, the adhesive layer 6 is preferably made of a urethane-based adhesive similar to the adhesive layer 4.

When manufacturing such an optical sheet 10, for example, the optical sheet 10 can be manufactured by forming a half mirror layer 3 on the first base material 1, and applying adhesives (adhesive layer 4 and adhesive layer 6) on both surfaces of the polarized layer 5, and bonding the polarized layer 5 so as to interpose the polarized layer 5 between a side on which the half mirror layer 3 of the first base material 1 is formed and the second base material 2.

As described above, the optical sheet 10 further includes the polarized layer 5 provided between the second base material 2 on the lens 7 (optical member) side among the first base material 1 and the second base material 2 and the half mirror layer 3. With this, the optical sheet 10 has a polarization function.

The half mirror layer 3 can also be protected by such a second embodiment, and has excellent optical characteristics and excellent designability.

### <Third embodiment>

FIG. 5 is an enlarged cross-sectional view of the optical sheet (third embodiment) of the present invention.

Hereinafter, the third embodiment of the optical sheet of the present invention will be described with reference to this figure, but the differences from the above-described embodiments will be mainly described, and the same matters will be omitted.

The present embodiment is the same as the first embodiment except that the adhesive layer includes a coloring material.

As shown in FIG. 5, in the optical sheet 10 of the present embodiment, the second base material 2, the half mirror layer 3, the adhesive layer 4, and the first base material 1 are laminated in this order from the lens 7 side. In addition, in the present embodiment, the coloring material is included in the adhesive layer 4. The coloring material is preferably one or a combination of two or more of a quinoline-based coloring agent, an anthraquinone-based coloring agent, a perylene-based coloring agent, a polymethine coloring agent, a porphyrin complex coloring agent, and a phthalocyanine coloring agent, as in each of the embodiments. With this, in a step of mixing the adhesive of the adhesive layer 4 and the coloring material, it is possible to favorably perform the mixing, and to reduce the agglomeration of the coloring material.

When manufacturing such an optical sheet 10, for example, the optical sheet 10 shown in the figure can be obtained by forming the half mirror layer 3 on the second base material 2, applying an adhesive (adhesive layer 4) including a coloring material on the surface opposite to the second base material 2 of the half mirror layer 3 or one surface of the first base material 1, and bonding the second base material 2 and the first base material 1 to interpose the adhesive (adhesive layer 4) .

Such an optical sheet 10 is an optical sheet used by being disposed on the surface of the lens 7, which is an optical member having light transmitting properties, and includes a pair of a first base material and a second base material having light transmitting properties, a half mirror layer 3 provided between the first base material and the second base material, which transmits a part of incident light and reflects the rest of the incident light, and an adhesive layer 4 that bonds the first base material 1 positioned on an opposite side to the lens 7 among the first base material and the second base material and the half mirror layer 3. In addition, the adhesive layer 4 includes a coloring material. With this, due to the synergistic effect of the coloring material included in the adhesive layer 4 and the reflected light in the half mirror layer 3, the desired color shines brightly, and the designability is excellent. In particular, since the adhesive layer 4 is positioned outside the half mirror layer 3 at the time of use, the effect of enhancing the designability can be remarkably exhibited. In addition, since the half mirror layer 3 is not exposed on the surface (upper surface or lower surface of the optical sheet 10) and is protected by the first base material 1 and the like, the half mirror layer 3 is prevented from being worn or damaged. From the above, the optical sheet 10 can protect the half mirror layer 3, has excellent optical characteristics, and is excellent in designability.

Hereinabove, the optical sheet and the optical component of the present invention have been described above with reference to the illustrated embodiment, but the present invention is not limited thereto. For example, each unit constituting the optical sheet of the present invention can be substituted with an optional constituent element exhibiting the same function. In addition, optional components be added.

The optical sheet of the present invention may be combined with optional two or more configurations (features) of each of the embodiments.

In addition, the optical sheet of the present invention can also be used by being attached to a vehicle such as an automobile, a motorcycle, and a railroad, or a window member such as an aircraft, a ship, and a house.

### Examples

Hereinafter, the present invention will be described more specifically based on examples. The present invention is not limited to these examples.

### 1. Formation of half mirror sheet (optical sheet)

### (Example 1)

First, 99.94 wt% of bisphenol A type polycarbonate (manufactured by Mitsubishi Engineering Plastics, "H3000"), 0.05 wt% of blue coloring material (manufactured by Kiwa Chemical Industry Co., Ltd., "KP PLAST Blue R"), and 0.01 wt% of red coloring material ("KP PLAST Red G" manufactured by Kiwa Chemical Industry Co., Ltd.) were mixed at the ratio to obtain a mixture. The mixture was extrusion molded to obtain a first base material (thickness 300 µm). In addition, 100 wt% of bisphenol A type polycarbonate (manufactured by Mitsubishi Engineering Plastics Co., Ltd., "H3000") was extrusion molded to obtain a second base material.

Subsequently, on one surface of the first base material, a high refractive index layer (thickness 62 nm) constituted of CeO₂ and a low refractive index layer (thickness 51 nm) constituted of SiO₂ were formed in this order to form a half mirror layer by using a vacuum vapor deposition method in which the type of vapor deposition source was appropriately changed appropriately changed, thereby obtaining a laminate of the first base material and the half mirror layer.

On the other hand, on one surface of the second base material, a coating film constituted of Konishi Bond Ultra Versatile Clear (silylated urethane resin) was applied so that a thickness of an adhesive layer formed after curing was 50 µm.

Subsequently, the laminate including the first base material and the laminate including the second base material were bonded together so that the half mirror layer and the coating film were in contact with each other, thereby obtaining a bonded body. Thereafter, this bonded body was cured in an environment of a temperature of 25°C and a humidity of 50% RH for 7 days to solidify the coating film and form an adhesive layer to obtain a half mirror sheet.

### (Examples 2 to 4, Comparative Examples 1 and 2)

Half mirror sheets of Examples 2 to 4 and Comparative Examples 1 and 2 were obtained in the same manner as in Example 1 except that the configuration of each part was changed as shown in Table 1.

### 2. Evaluation

Half mirror sheets of each example and each comparative example were evaluated by the following methods.

### <Measurement of spectral reflectance>

Using a spectrophotometer V-760 (manufactured by JASCO Corporation), spectral reflectance measurement using an integrating sphere was performed on a mirror surface of the half mirror sheets of each example and each comparative example, and color parameters (L*, a*, b*) were calculated under conditions of D65 light source and 10 degree viewing angle. The results are shown in Table 1.

### <Punching>

A ring-shaped blade having an inner diameter of 80 mm was prepared, and a sample having a ring-shaped plan view shape was prepared by punching each of the half mirror sheets of each example and each comparative example from the second base material side. The blade was a double-edged blade having a tip angle θ of 30°, and the punching speed (number of punches per minute) with a 45-ton punching press was 35 spm.

### <Curve followability test>

Using a molding machine CPL32 (manufactured by Rema), each sample was vacuum-suctioned in an aluminum spherical mold with a radius of curvature of 87 mm (6 curves) having a vacuum hole at one center for 4 minutes at 150°C at a vacuum degree of 0.05 MPa to make the sample of each example and each comparative example into a curved shape of 6 curves.

Subsequently, the following evaluations were performed on the samples of each example and each comparative example having a curved shape. That is, the presence or absence of occurrence of cracks in the half mirror layer included in the samples of each example and each comparative example was visually observed and microscopically observed using a digital microscope ("VHX-1000" manufactured by KEYENCE CORPORATION), and the evaluation was performed according to the evaluation criteria as follows. The results are shown in Table 1.

A: No cracks were visually observed, and no cracks were observed even under microscopic observation.
B: No cracks were visually observed, and fine cracks were observed under microscopic observation.
C: Fine cracks were visually observed, and cracks were also observed under microscopic observation.
D: Obvious cracks were visually observed, and cracks were also observed under microscopic observation.

**[Table 1]**

| | | | Example1 | Example2 | Example3 | Example4 | Comparative example1 | Comparative example2 |
|---|---|---|---|---|---|---|---|---|
| First base material | Refractive index | | 1.58 | 1.58 | 1.58 | 1.58 | 1.58 | 1.58 |
| | H3000 weight fraction | | 99.94 | 99.94 | 99.94 | 99.96 | 100 | 100 |
| | Coloring material 1 | | Blue R | Blue R | Red H2G | Red H2G | None | None |
| | Coloring material 1 weight fraction | | 0.05 | 0.02 | 0.03 | 0.03 | | |
| | Coloring material 2 | | Red G | Yellow G | Yellow G | Green G | None | None |
| | coloring material 2 weight fraction | | 0.01 | 0.04 | 0.03 | 0.01 | - | - |
| | Thickness (µm) | | 300 | 300 | 300 | 300 | 300 | 300 |
| Half mirror layer | High refractive index layer | Type | CeO₂ | CeO₂ | CeO₂ | CeO₂ | CeO₂ | CeO₂ |
| | | Thickness (nm) | 62 | 62 | 62 | 62 | 62 | 80 |
| | | Refractive index | 2.44 | 2.44 | 2.44 | 2.44 | 2.44 | 2.44 |
| | Low refractive index layer | Type | SiO₂ | SiO₂ | SiO₂ | SiO₂ | SiO₂ | SiO₂ |
| | | Thickness (nm) | 51 | 51 | 51 | 51 | 51 | 110 |
| | | Refractive index | 1.46 | 1.46 | 1.46 | 1.46 | 1.46 | 1.46 |
| | Total thickness (nm) | | 113 | 113 | 113 | 113 | 113 | 190 |
| Adhesive layer | Type | | Silylated urethane | Silylated urethane | Silylated urethane | Silylated urethane | Silylated urethane | Silylated urethane |
| | Thickness (µm) | | 50 | 50 | 50 | 50 | 50 | 50 |
| | Refractive index | | 1.55 | 1.55 | 1.55 | 1.55 | 1.55 | 1.55 |
| Second base material | H3000 weight fraction | | 100 | 100 | 100 | 100 | 100 | 100 |
| | Refractive index | | 1.58 | 1.58 | 1.58 | 1.58 | 1.58 | 1.58 |
| | Thickness (µm) | | 300 | 300 | 300 | 300 | 300 | 300 |
| Evaluation | Reflection color | L* | 42.1 | 48.2 | 45.3 | 40.1 | 50.1 | 44.4 |
| | | a* | 7.5 -30.4 | | -1.8 | -2.1 | -4.5 | -0.1 |
| | | b* | -35.6 | 2.4 | 14.9 | -9.4 | 1.6 | 40.9 |
| | | Color | Blue | Green | Gold | Blue silver | Silver | Gold |
| | Curve | followability | A | A | A | A | A | D |

As shown in Table 1, the half mirror sheet (sample) in each example showed excellent results in both curve followability and punching property. In addition, although each example uses the same half mirror layer as in Comparative Example 1, various reflection colors are realized depending on the color of the base material 1, and the designability can be enhanced.

On the other hand, the half mirror sheet (sample) in Comparative Example 2 showed a gold reflection color similar to that in Example 3, and a result was shown in which punching property was excellent, whereas obvious cracks were visually observed and curve followability was also poor. If the reflection color is adjusted only in the half mirror layer, the layer becomes thicker depending on the color as in Comparative Example 2, and cracks are likely to occur. However, as in Examples 1 to 4, it was confirmed that it is possible to maintain the workability and enhance the designability by adding a coloring material to the base material 1.

### Industrial Applicability

According to the present invention, it is possible to provide an optical sheet having excellent optical characteristics and excellent designability, and an optical component provided with such an optical sheet, which can protect the half mirror layer. Therefore, the present invention has industrial applicability.

## Claims

1. An optical sheet that is used by being disposed on a surface of an optical member having light transmitting properties, the optical sheet comprising:
a pair of base materials having light transmitting properties; and
a half mirror layer provided between the pair of base materials, which transmits a part of incident light and reflects the rest of the incident light,
wherein the base material positioned on an opposite side to the optical member among the pair of base materials includes a coloring material.

2. The optical sheet according to Claim 1, further comprising:
a polarized layer provided between the base material on the optical member side among the pair of base materials and the half mirror layer.

3. An optical sheet that is used by being disposed on a surface of an optical member having light transmitting properties, the optical sheet comprising:
a pair of base materials having light transmitting properties;
a half mirror layer provided between the pair of base materials, which transmits a part of incident light and reflects the rest of the incident light; and
an adhesive layer bonding the base material positioned on an opposite side to the optical member among the pair of base materials and the half mirror layer,
wherein the adhesive layer includes a coloring material.

4. The optical sheet according to Claim 3,
wherein the adhesive layer includes a urethane-based adhesive.

5. The optical sheet according to any one of Claims 1 to 4,
wherein the coloring material is one or a combination of two or more of a quinoline-based coloring agent, an anthraquinone-based coloring agent, a perylene-based coloring agent, a polymethine coloring agent, a porphyrin complex coloring agent, and a phthalocyanine coloring agent.

6. An optical component comprising:
an optical member having light transmitting properties; and
the optical sheet according to any one of Claims 1 to 5, which is used by being disposed on a surface of the optical member.
